# EUROPEAN PATENT APPLICATION

(11) **EP 4 852 083 A1**
(43) Date of publication of application: **09.12.2026**
(21) Application number: 25883110.6
(22) Date of filing: 21.10.2025
(51) Int. Cl.: H01M 4/36, H01M 4/38, H01M 4/587, H01M 4/133, H01M 4/134, H01M 10/0525, C01B 32/05, C01B 33/02, C01B 32/956, H01M 4/02

(54) **ANODE ACTIVE MATERIAL, METHOD FOR PREPARING ANODE ACTIVE MATERIAL, ANODE COMPOSITION, ANODE FOR LITHIUM SECONDARY BATTERY COMPRISING SAME, AND LITHIUM SECONDARY BATTERY COMPRISING ANODE**

(30) Priority: 22.10.2024 KR 20240145019; 20.10.2025 KR 20250151463
(71) Applicant: LG Energy Solution, Ltd., Seoul 07335 (KR)
(72) Inventor: KIM, Moonjin, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2025/016653
(87) International publication number: WO 2026/089418

(57) **Abstract**

A negative electrode active material for a lithium secondary battery, includes a silicon-carbon (Si/C) composite. When the silicon-carbon composite is pressed under a pressure of about 3 tons or more and 9 tons or less, a minimum particle diameter (Dmin) value is about 0.9 µm or more.

## Description

### CROSS-REFERENCE TO RELATED APPLICATIONS

This application is based on and claims priority from Korean Patent Application No. 10-2024-0145019 filed on October 22, 2024, with the Korean Intellectual Property Office, the disclosure of which is incorporated herein in its entirety by reference.

### TECHNICAL FIELD

The present disclosure relates to a negative electrode active material, a method of preparing a negative electrode active material, a negative electrode composition, a negative electrode for a lithium secondary battery including the same, and a lithium secondary battery including the negative electrode.

### BACKGROUND

Due to the rapid increase in fossil fuel use, the demand for alternative or clean energy is increasing, and one of the most active areas of research is power generation and storage using electrochemical reactions. A representative example of an electrochemical device that utilizes such electrochemical energy is a secondary battery, which is finding more and more applications.

In the meantime, as the technology development and demand for mobile devices increase, the demand for secondary batteries as an energy source is rapidly increasing. Among the secondary batteries, lithium secondary batteries, which have high energy density and voltage, relatively long cycle life, and low self-discharge rate, have been commercialized and are widely being used. In addition, research is actively being conducted on methods for manufacturing high-density electrodes with higher energy density per unit volume as electrodes for such high-capacity lithium secondary batteries.

### SUMMARY

The present disclosure provides a technology capable of improving the brittleness of a silicon-carbon composite by controlling the physical properties of porous carbon during a deposition process in which SiH₄ is deposited onto the porous carbon in the course of manufacturing the silicon-carbon composite, and modifying deposition conditions to improve the deposition uniformity of silicon and the densification of internal pores.

Accordingly, the present disclosure relates to a negative electrode active material according to the above-described technology, a method of preparing a negative electrode active material, a negative electrode composition, a negative electrode for a lithium secondary battery including the same, and a lithium secondary battery including the negative electrode.

An embodiment of the present disclosure provides a negative electrode active material including a silicon-carbon composite, in which, when the silicon-carbon composite is pressed under a pressure of about 3 tons to about 9 tons, a minimum particle diameter (Dmin) value is about 0.9 µm or greater.

Another embodiment of the present disclosure provides a method for manufacturing a negative electrode active material, the method including: preparing a porous carbon; and depositing silicon onto the porous carbon to form a silicon-carbon composite, in which, when the silicon-carbon composite is pressed under a pressure of about 3 tons to about 9 tons, the Dmin value is about 0.9 µm or greater.

Still another embodiment of the present disclosure provides a negative electrode composition including the negative electrode active material according to the present disclosure, a negative electrode conductive material, and a negative electrode binder.

Yet another embodiment of the present disclosure provides a negative electrode for a lithium secondary battery, the negative electrode including: a negative electrode current collector layer; and a negative electrode active material layer provided on one or both surfaces of the negative electrode current collector layer, in which the negative electrode active material layer includes the negative electrode composition according to the present disclosure or a cured product thereof.

Still yet another embodiment of the present disclosure provides a lithium secondary battery including a positive electrode, the negative electrode for a lithium secondary battery according to the present disclosure, a separator interposed between the positive electrode and the negative electrode, and an electrolyte.

In an embodiment of the present disclosure, the negative electrode active material includes a silicon-carbon composite, and the composite includes silicon deposited on porous carbon. For example, the silicon-carbon composite has a structure in which silicon is deposited on the porous carbon, and during the deposition process, the silicon is densely deposited to provide a uniform surface.

The negative electrode of a lithium secondary battery undergoes a process in which a negative electrode slurry is applied onto a negative electrode current collector layer and subsequently rolled during manufacture. At this time, due to the rolling pressure, the composite-type negative electrode active material may break, resulting in silicon being exposed on the surface.

In the silicon-carbon composite according to the present disclosure, by controlling the physical properties of the precursor porous carbon during the preparation of the silicon-carbon composite, the deposition of silicon may be made more uniform and compact. As a result, the silicon-carbon composite thus obtained exhibits improved resistance to powder fracture, such that, when pressed at a pressure of about 3 tons to 9 tons, the Dmin value satisfies about 0.9 µm or greater, and the moisture content of the powder may thereby be controlled.

A negative electrode including the silicon-carbon composite according to the present disclosure may secure capacity characteristics while reducing side reactions on the surface of the active material, thereby improving resistance characteristics, and may also improve cycle life problems associated with volume expansion.

### BRIEF DESCRIPTION OF THE DRAWINGS

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a flowchart illustrating a process for manufacturing a silicon-carbon composite according to an embodiment of the present disclosure.
FIG. 2 is a diagram illustrating a stacked structure of a negative electrode for a lithium secondary battery according to an embodiment of the present disclosure.
FIG. 3 illustrates a stacked structure of a secondary battery according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Before describing the present disclosure, some terms are first defined.

Through the specification, when a part is said to "include" a component, this does not exclude other components, but rather includes other components, unless otherwise specifically stated.

As used herein, "p to q" means a range of "p or more and q or less."

As used herein, the "specific surface area" is measured by the Brunauer-Emmett-Teller (BET) method, and is calculated from the nitrogen gas adsorption amount at liquid nitrogen temperature (77 K) using, for example, BELSORP-mino II manufactured by BEL Japan. For example, in the present disclosure, the BET specific surface area may mean the specific surface area measured by the above-mentioned measurement method.

As used herein, "Dn" represents particle size distribution, and means a particle size at the n% point of the cumulative distribution of the number of particles according to particle size. For example, D50 is a particle size at the 50% point of the cumulative distribution of the number of particles according to particle size (average particle size), D90 is a particle size at the 90% point of the cumulative distribution of the number of particles according to particle size, and D10 is a particle size at the 10% point of the cumulative distribution of the number of particles according to particle size. Meanwhile, the average particle size may be measured using a laser diffraction method. For example, powder to be measured is dispersed in a dispersion medium and introduced into a commercially available laser diffraction particle size measurement device (*e.g.*, Microtrac S3500) to measure the difference in diffraction pattern according to particle size when the particles pass through the laser beam, thereby calculating the particle size distribution.

In an embodiment of the present disclosure, a particle size or particle diameter may mean an average diameter or a representative diameter of each grain forming the metal powder.

As used herein, when a polymer contains a certain monomer as a monomer unit, it means that the monomer participates in a polymerization reaction and is contained as a repeating unit in the polymer. In the present specification, when a polymer is said to contain a monomer, it is to be construed as the same as that the polymer contains a monomer as a monomer unit.

As used herein, the term "polymer" is understood to be used in a broad sense to include copolymers unless specified as "homopolymer."

As used herein, the weight average molecular weight (Mw) and number average molecular weight (Mn) are polystyrene-converted molecular weights measured by gel permeation chromatography (GPC) using monodisperse polystyrene polymers (standard samples) of various degrees of polymerization commercially available for molecular weight measurement as standard materials. In the present specification, unless otherwise specified, molecular weight means weight average molecular weight.

As used herein, the terms "about," "approximately," and "substantially" refer to a range of, or approximation to a numerical value or degree, taking into account inherent manufacturing and material tolerances (*e.g.*, ±5%).

In general, a secondary battery is constituted by a positive electrode, a negative electrode, an electrolyte, and a separator. The negative electrode includes a negative electrode active material that inserts and releases lithium ions from the positive electrode, and a silicon-based active material having a large discharge capacity may be used as the negative electrode active material.

Recently, as the demand for high-density energy batteries increases, research is actively being conducted on methods to increase the capacity by using silicon compounds, such as Si/C or SiOₓ, which have a capacity about 10 times greater than that of graphite-based materials, as the negative electrode active material. However, silicon-based compounds, which are high-capacity materials, have a large capacity compared to conventionally used graphite, but suffer from the problem that they rapidly expand in volume during charging process, which causes the conductive path to be cut off, and degrades the battery characteristics. For example, Japanese Laid-Open Patent Publication No. 2009-080971 discloses the use of polyacrylate as a binder in a graphite-based negative electrode active material layer.

In order to solve such problems when silicon-based compounds are used as negative electrode active materials, various methods are being studied, such as methods for controlling the operating potential, methods for additionally coating a thin film on the surface of the active material layer, methods for controlling the particle size of the silicon-based compound to suppress the volume expansion itself, or methods for preventing the conductive path from being disconnected. However, since the above-mentioned methods may rather lower the performance of the battery, there are limitations in their application, and there are still limitations in the commercialization of negative electrode batteries with a high content of silicon-based compounds.

In recent years, research has been conducted on silicon-carbon composites among silicon-based active materials, in order to secure characteristics such as high energy density and fast charging. In manufacturing a negative electrode for a lithium secondary battery, a slurry including a negative electrode active material is applied to a negative electrode current collector layer and then subjected to rolling. However, in the case of the silicon-carbon composite, since silicon and carbon are present in a composite state, the composite is easily fractured during the rolling process, thereby exposing silicon, which is vulnerable to moisture, to moisture. As a result, there arises a problem in that the lifetime characteristics are degraded.

In view of these issues, the present disclosure provides a technology capable of preventing or suppressing the conduction path from being damaged due to the volume expansion of the silicon-carbon composite, even when the silicon-carbon composite is used as the negative electrode active material.

Hereinafter, embodiments of the present disclosure are described in detail with reference to the drawings to enable one of ordinary skill in the art to which the present disclosure belongs, to easily practice the present disclosure. However, the present disclosure may be implemented in various different forms and is not limited to the following description.

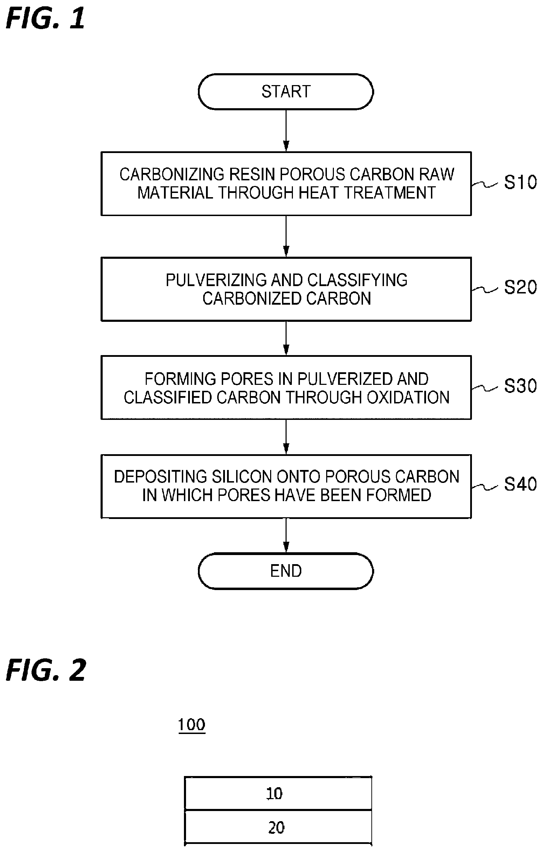

FIG. 1 is a flowchart illustrating a process for manufacturing a silicon-carbon composite according to an embodiment of the present disclosure.

Referring to FIG. 1, a process for preparing a silicon-carbon composite according to an embodiment of the present disclosure includes: (S10) a step of carbonizing a resin porous carbon raw material through heat treatment; (S20) a step of pulverizing and classifying the carbonized carbon; (S30) a step of forming pores in the pulverized and classified carbon through oxidation; and (S40) a step of depositing silicon onto the porous carbon in which the pores have been formed.

In the meantime, the silicon-carbon composite prepared through the above steps is used to produce a negative electrode active material for a lithium secondary battery, and a negative electrode is manufactured by forming a negative electrode active material layer on a negative electrode current collector using the negative electrode active material.

The silicon-carbon composite manufactured through the above process is subjected to property evaluation by measuring the particle size distribution under an applied pressure, the volume fraction of particles smaller than 2 µm, and the moisture content.

Based on the particle size distribution results (*e.g.*, a normal distribution graph with particle size on the x-axis and volume fraction on the y-axis), Dmin, D50, and Dmax are determined. In an embodiment, the measurement criteria are as follows. For example, Dmin: the particle size value at the point where the volume fraction starts to be recorded on the graph, D50: the particle size value at the point where the cumulative volume fraction reaches 50%, and Dmax: the particle size value at the end of the graph.

The volume fraction of fine particles is calculated as the cumulative volume fraction at 2 µm based on the particle size distribution results (*e.g.,* normal distribution graph with particle size on the x-axis and volume fraction on the y-axis).

In addition, in an embodiment, the moisture content is measured by placing an appropriate amount of the pressed sample (*e.g.*, about 2 g) in a dedicated container of a moisture analyzer and heating it to an appropriate temperature (*e.g.*, about 250 °C).

An embodiment of the present disclosure provides a negative electrode active material for a secondary battery including a silicon-carbon composite, in which, when the silicon-carbon composite is pressed under a pressure of about 3 tons to about 9 tons, a Dmin value is about 0.9 µm or greater.

The negative electrode active material for a lithium secondary battery according to the present disclosure, compared to the case of using only a conventional carbon-based active material, improves capacity characteristics, achieves high energy density, and enhances fast-charging performance by additionally including a silicon-carbon composite.

In the present specification, the silicon-carbon composite is denoted as a Si/C composite, which is distinct from silicon carbide (SiC).

In the present disclosure, the silicon-carbon composite may be manufactured by various methods known in the art, including deposition-type or pulverization-type processes, without limitation. Among these, the silicon-carbon composite may include porous carbon and silicon deposited on the porous carbon.

In the present disclosure, the negative electrode active material may be a Si/C composite including porous carbon and silicon deposited on the porous carbon.

The Si/C composite may be formed by compounding silicon and graphite, and may form a structure in which a core compounded with silicon and graphite is surrounded by graphene or amorphous carbon. In the silicon-carbon composite, the silicon may be nano-silicon. For example, the nano-silicon may be silicon in the range of about 1 nm to 999 nm.

In the present disclosure, the negative electrode active material may further include a carbon-based active material.

In the present disclosure, the carbon-based active material may include graphite, and the graphite may include natural graphite and artificial graphite.

In the present disclosure, the natural graphite may have an average particle diameter (D50) of about 5 µm to about 20 µm, and the artificial graphite may have an average particle diameter (D50) of about 5 µm to about 20 µm.

In another embodiment, the average particle diameter (D50) of the natural graphite may be about 5 µm to 20 µm, for example, about 7 µm to 18 µm, or about 9 µm to 15 µm.

In another embodiment, the average particle diameter (D50) of the artificial graphite may be about 5 µm to 20 µm, for example, about 8 µm to 18 µm, or about 10 µm to 16 µm.

In the present disclosure, the weight ratio of artificial graphite to natural graphite may be about 60:40 to 80:20 based on 100 parts by weight of the carbon-based active material.

In another embodiment, the weight ratio of artificial graphite to natural graphite may be about 60:40 to 80:20, or about 65:35 to 78:22, or about 70:30 to 75:25 based on 100 parts by weight of the carbon-based active material.

In the case of graphite, both artificial graphite and natural graphite may be included. It has been confirmed that artificial graphite exhibits superior cell characteristics compared with natural graphite, so the use of natural graphite has been reduced and the use amount of artificial graphite has been increased. However, from the viewpoint of cost, artificial graphite requires coking and graphitization processes, which result in high processing costs. Accordingly, when the above ranges are satisfied, both the cost issue and the improvement of cell characteristics may be achieved.

In the present disclosure, the negative electrode active material may include the silicon-carbon composite in an amount of about 50 parts by weight or less, based on 100 parts by weight of the negative electrode active material.

In another embodiment, the negative electrode active material may include the silicon-carbon composite in an amount of about 50 parts by weight or less, for example about 45 parts by weight or less, or about 40 parts by weight or less, or about 1 part by weight or more, about 5 parts by weight or more, or about 10 parts by weight or more, based on 100 parts by weight of the negative electrode active material.

By including the negative electrode active material within the above-described range, it is possible to secure the capacity characteristics and energy density of the negative electrode. In general, as the content of the silicon-carbon composite increases, the energy density may be improved, but the cycle characteristics deteriorate due to severe volume expansion. Conversely, when the content of the Si/C composite decreases, it is not possible to secure high energy density and fast-charging performance. Therefore, when the above-described content is used, both high energy density and improved fast-charging performance may be achieved.

Meanwhile, the average particle diameter (D50 particle size) of the silicon-carbon composite of the present disclosure is about 1 µm or more and 10 µm or less, for example, about 2 µm to 8 µm, or may be about 3 µm to 8 µm. When the average particle diameter is within the above range, the specific surface area of the particles is within an appropriate range, so that the viscosity of the negative electrode slurry is formed within an appropriate range. Accordingly, the particles constituting the negative electrode slurry are smoothly dispersed. In addition, when the size of the silicon-carbon composite is greater than the lower limit range, the contact area between the silicon-carbon composite and the conductive material is excellent due to the composite made up of the conductive material and the binder in the negative electrode slurry, so that the possibility of the conductive network being sustained increases, thereby increasing the capacity retention rate. Meanwhile, when the average particle diameter satisfies the above range, excessively large silicon particles are excluded, so that the surface of the negative electrode is formed smoothly, and thus the phenomenon of uneven current density during charge and discharge may be suppressed.

In an embodiment of the present disclosure, the silicon-carbon composite generally has a characteristic BET surface area. The BET surface area of the silicon-carbon composite is, for example, about 0.01 m²/g to 150 m²/g, about 0.1 m²/g to 100 m²/g, about 0.2 m²/g to 80 m²/g, or about 0.2 m²/g to 18 m²/g. In an embodiment, the BET surface area is measured (*e.g.,* using nitrogen) in accordance with DIN 66131.

In an embodiment of the present disclosure, the silicon of the silicon-carbon composite may be present in crystalline or amorphous form, and the silicon may be, for example, spherical or fragmentary particles. Alternatively, the silicon may also have a fibrous structure or may be present in the form of a silicon-containing film or coating.

In an embodiment of the present disclosure, the silicon-carbon composite may have a non-spherical shape, and its circularity is, for example, about 0.9 or less, about 0.7 to 0.9, about 0.8 to 0.9, or about 0.85 to 0.9.

In the present disclosure, the circularity is determined by Formula 1-A below, where A is an area, and P is a boundary line. [Formula 1-A] $4 π {A / P}^{2}$

In an embodiment of the present disclosure, when the silicon-carbon composite is pressed under a pressure of about 3 tons or more to 9 tons or less, a Dmin value may be about 0.9 µm or greater.

In the present disclosure, the pressure condition of applying pressure of approximately 3 tons to 9 tons may be interpreted as a rolling strength that simulates the rolling strength of the anode active material alone, which achieves a rolling density of 1.5 g/cc to 1.8 g/cc when forming the final anode active material layer.

In other words, the anode active material layer contains not only the anode active material but also other materials such as a conductive agent or binder. In this case, the rolling strength required to achieve a rolling density of 1.5 g/cc to 1.8 g/cc when forming the anode active material layer containing all of these components can be considered equivalent to the rolling strength of 3 tons to 9 tons when rolling the anode active material alone.

For example, the pressing conditions are the pressing conditions are set at room temperature (*e.g.*, 20 °C to 25 °C), with the composite being maintained under the applied pressure for 30 seconds. In this case, the pressing corresponds to the condition where only the silicon-carbon composite powder is pressed.

For example, the silicon-carbon composite powder is charged into a molding die or a pellet mold. Thereafter, a hydraulic press or a mechanical press is used to apply the predetermined pressure to the powder. At this time, the pressing is performed at room temperature (*e.g.*, 20 °C to 25 °C), and the powder is left under the applied pressure for about 30 seconds so that the powder is uniformly compacted. In this process, the pressing is performed only on the silicon-carbon composite powder without any binder, conductive material, or additive.

In an embodiment of the present disclosure, when the silicon-carbon composite is pressed under a pressure of about 3 tons or more to 9 tons or less, the Dmin value may be about 0.9 µm or greater, for example, about 1.0 µm or greater, or about 1.5 µm or greater, and may be about 3.0 µm or less, for example, about 2.9 µm or less, or about 2.8 µm or less.

In the case of the silicon-carbon composite according to the present disclosure, silicon is densely and uniformly deposited inside the porous carbon during its manufacture, so that when pressed under the above conditions, the Dmin value satisfies the above range. As a result, the degree of fracture of the silicon-carbon composite is reduced, the proportion of silicon exposed to the outside is lowered, and the lifespan characteristics of the lithium secondary battery are enhanced.

Such characteristics are obtained when, in the manufacturing process of the silicon-carbon composite, conditions of the porous carbon are modified. For example, in the manufacture of the silicon-carbon composite, when the micropore volume of the porous carbon is about 85% or greater and porous carbon made of resin rather than biomass is used, the rigidity of the resulting silicon-carbon composite is enhanced. Accordingly, the physical properties under the above pressing conditions are satisfied, and thus, the composite has characteristics that enhance the lifespan characteristics of the secondary battery.

In the present disclosure, when the silicon-carbon composite is pressed under a pressure of about 3 tons or more to 9 tons or less, a silicon-carbon composite having a moisture content of about 200 ppm or less is provided.

In another embodiment, when the silicon-carbon composite is pressed under a pressure of about 3 tons or more to 9 tons or less, the moisture content is about 200 ppm or less, for example, about 190 ppm or less, or about 150 ppm or less, and is about 5 ppm or more, for example, about 10 ppm or more.

In the case of the silicon-carbon composite according to the present disclosure, when rolled, the degree of breakage is relatively low, so that it has the above-described moisture content. By including moisture within such a range, side reactions are controlled, resistance characteristics are improved, and the lifespan characteristics during operation of the battery are enhanced.

In an embodiment of the present disclosure, when the silicon-carbon composite is pressed under a pressure of about 3 tons or more to about 9 tons or less, a silicon-carbon composite is provided in which the Dmin value is about 0.9 µm or more, the Dmax value is about 20 µm or less, and the average particle diameter (D50) is about 3 µm or more to about 9 µm or less.

In the present disclosure, when the silicon-carbon composite is pressed under a pressure of about 3 tons or more to about 9 tons or less, a silicon-carbon composite is provided in which the particle volume fraction of particles smaller than about 2 µm, based on the silicon-carbon composite, is about 2% or less.

In another embodiment, when the silicon-carbon composite is pressed under a pressure of about 3 tons or more to about 9 tons or less, the particle volume fraction of particles smaller than about 2 µm, based on the silicon-carbon composite, is about 2% or less, for example, about 1.8% or less, or about 1.5% or less, and is about 0% or more.

When pressed as described above, the generation of fines (*e.g.*, particles smaller than about 2 µm) of the silicon-carbon composite is controlled. This results from the silicon-carbon composite being uniformly formed and having high rigidity, and thus provides characteristics that control side reactions during battery operation and prevent an increase in resistance.

For example, in the silicon-carbon composite according to the present disclosure, even under pressing, particles of the silicon-carbon composite smaller than 2 µm are not generated, which corresponds to the result of silicon being densely and firmly deposited during the manufacture of the silicon-carbon composite.

In the present disclosure, the silicon-carbon composite further includes a carbon coating layer.

The carbon included in the carbon coating layer is not particularly limited in composition and includes those used in the related art.

In an embodiment of the present disclosure, a negative electrode composition is provided, which includes the negative electrode active material as described above; a negative electrode conductive material; and negative electrode binder.

In an embodiment of the present disclosure, a negative electrode composition is provided, in which the negative electrode active material is about 40 parts by weight or more based on 100 parts by weight of the negative electrode composition.

In another embodiment, the negative electrode active material may be included in an amount of about 40 parts by weight or more, for example, about 60 parts by weight or more, about 65 parts by weight or more, or about 70 parts by weight or more, and may be about 99 parts by weight or less, for example, about 98 parts by weight or less, or about 96 parts by weight or less, based on 100 parts by weight of the negative electrode composition.

The negative electrode composition according to the present application uses a negative electrode active material that satisfies a a specific pore distribution that suppresses volume expansion and side reactions during charging and discharging even when the silicon-carbon composite having a significantly high capacity is used within the above range, so that the performance of the negative electrode is not deteriorated even within the above range, and the output characteristics during charge and discharge are excellent.

Conventionally, it has been common to use only graphite compounds as negative electrode active materials, but recently, as the demand for high-capacity batteries has increased, attempts to mix and use silicon-based active materials to increase a capacity have been increasing. However, in the case of silicon-based active materials, even when the characteristics of the silicon-based active material itself are adjusted as described above, there may be some problems that the volume rapidly expands during the charging/discharging process, which may damage the conductive path formed within the negative electrode active material layer.

In an embodiment of the present disclosure, the negative electrode conductive material may include at least one selected from particulate conductive material, flake-type conductive material, and fibrous conductive material.

In an embodiment of the present disclosure, the particulate conductive material may be used to improve conductivity of the negative electrode, and means a particulate or spherical conductive material having conductivity without causing a chemical change. For example, the particulate conductive material may include at least one selected from natural graphite, artificial graphite, carbon black, acetylene black, Ketjen black, channel black, furnace black, lamp black, thermal black, conductive fibers, fluorocarbons, aluminum powder, nickel powder, zinc oxide, potassium titanate, titanium oxide, and polyphenylene derivatives, for example, may include carbon black in view of its ability to implement high conductivity and excellent dispersibility.

In an embodiment of the present disclosure, the particulate conductive material may have a BET surface area of about 40 m²/g or more and 70 m²/g or less, for example, about 45 m²/g or more and 65 m²/g or less, or about 50 m²/g or more and 60 m²/g or less.

In an embodiment of the present disclosure, the particulate conductive material may satisfy a functional group (volatile matter) content of about 0.01% or more and 1% or less, for example, 0.01% or more and 0.3% or less, or about 0.01% or more and 0.1% or less.

When the functional group content of the particulate conductive material satisfies the above range, a functional group present on the surface of the particulate conductive material, so that when water is used as a solvent, the particulate conductive material may be smoothly dispersed in the solvent. In the present disclosure, by using a specific silicon-based active material, the functional group content of the particulate conductive material may be reduced, thereby having an excellent effect in improving dispersibility.

In an embodiment of the present disclosure, a particulate conductive material having a functional group content within the above range is included together with a silicon-based active material, and the control of the functional group content may be controlled according to the degree of heat treatment of the particulate conductive material.

In an embodiment of the present disclosure, the particle size of the particulate conductive material may be about 10 nm to 100 nm, for example, about 20 nm to 90 nm, or about 20 nm to 60 nm.

In an embodiment of the present disclosure, the conductive material may include a flake-type conductive material.

The flake-type conductive material may play a role in improving conductivity by increasing planar contact between silicon particles in the negative electrode, and at the same time suppressing disconnection of the conductive path due to volume expansion. The flake-type conductive material may be expressed as a plate-type conductive material or a bulk conductive material.

In an embodiment of the present disclosure, the flake-type conductive material may include at least one selected from plate-type graphite, graphene, graphene oxide, and graphite flakes, and in an embodiment, the flake-type conductive material may be plate-type graphite.

In an embodiment of the present disclosure, the average particle diameter (D50) of the flake-type conductive agent may be about 2 µm to 7 µm, for example, about 3 µm to 6 µm, or about 3.5 µm to 5 µm. When the above range is satisfied, the particle size is sufficient to facilitate dispersion without causing an excessive increase in viscosity of the negative electrode slurry. Therefore, the dispersion effect is excellent when dispersion is performed using the same equipment and time.

In an embodiment of the present disclosure, the surface-shaped conductive material may be a high-specific surface area surface-shaped conductive material having a high BET surface area; or a low-specific surface area surface-shaped conductive material.

In an embodiment of the present disclosure, a high-specific surface area surface-shaped conductive material or a low-specific surface area surface-shaped conductive material may be used without any limitation as the surface-shaped conductive material. However, since the surface-shaped conductive material according to the present disclosure may be affected to some extent by dispersion influence on electrode performance, a low-specific surface area surface-shape conductive material that does not cause dispersion problems may be used.

In an embodiment of the present disclosure, the flake-type conductive material may have a BET specific surface area of about 1 m²/g or more.

In another embodiment, the flake-type conductive material may have a BET specific surface area of about 1 m²/g or more and 500 m²/g or less, for example, about 5 m²/g or more and 300 m²/g or less, or about 5 m²/g or more and 250 m²/g or less.

The flake-type conductive material according to the present disclosure may use a high-specific surface area flake-type conductive material or a low-specific surface area flake-type conductive material.

In another embodiment, the flake-type conductive material is a high-specific surface area surface-shaped conductive material, and may have a BET surface area in a range of about 50 m²/g to 500 m²/g, for example, about 80 m²/g to 300 m²/g, or about 100 m²/g to 300 m²/g.

In yet another embodiment, the flake-type conductive material is a low-specific surface area surface-shaped conductive material, and may have a BET surface area in a range of about 1 m²/g to 40 m²/g, for example, about 5 m²/g to 30 m²/g, or about 5 m²/g to 25 m²/g.

Other conductive materials may include fibrous conductive materials such as carbon nanotubes. The carbon nanotubes may be bundle-type carbon nanotubes. The bundle-type carbon nanotubes may include a plurality of carbon nanotube units. Here, unless otherwise stated, the term "bundle-type" refers to a secondary shape in the form of a bundle or rope in which a plurality of carbon nanotube units are arranged in a substantially same orientation in a parallel manner or entangled with the longitudinal axes of the carbon nanotube units. The carbon nanotube units have a cylindrical shape of a graphite sheet with a nano-sized diameter and an sp² bonding structure. Depending on the angle and structure at which the graphite sheet is rolled, the characteristics of a conductor or a semiconductor may be exhibited. The bundled-type carbon nanotubes may be uniformly dispersed during the manufacture of a negative electrode compared to entangled type carbon nanotubes, and may smoothly form a conductive network within the negative electrode, thereby improving the conductivity of the negative electrode.

In the present disclosure, a negative electrode composition is provided in which the negative electrode conductive material is about 20 parts by weight or less, based on 100 parts by weight of the negative electrode composition.

In another embodiment, the negative electrode conductive material is about 20 parts by weight or less, about 17 parts by weight or less, or about 15 parts by weight or less, and is about 0.01 parts by weight or more or about 0.02 parts by weight or more, based on 100 parts by weight of the negative electrode composition.

The negative electrode conductive material according to the present disclosure has a completely separate composition from the positive electrode conductive material applied to the positive electrode. The negative electrode conductive material according to the present disclosure plays a role of holding the contact point between silicon-based active materials, which greatly expand the volume of the electrode due to charging and discharging, and the positive electrode conductive material plays a role of providing some conductivity while acting as a buffer when rolled, and is different in composition and role from the negative electrode conductive material of the present disclosure.

In addition, the negative electrode conductive material according to the present disclosure is applied to a silicon-based active material, and has a composition that is different from that of a conductive material applied to a graphite-based active material. The conductive material used in an electrode having a graphite-based active material simply has smaller particles compared to the active material, and thus has the characteristics of improving output characteristics and imparting some conductivity, and is different in composition and role from the negative electrode conductive material applied together with a silicon-based active material, as in the present disclosure.

In an embodiment of the present disclosure, the flake-type conductive material used as the negative electrode conductive material has a structure and a role different from those of the carbon-based active material generally used as the negative electrode active material. For example, the carbon-based active material used as the negative electrode active material may be artificial graphite or natural graphite, and refers to a material processed into a spherical or dot-shaped form to facilitate the storage and release of lithium ions.

In the meantime, the flake-type conductive material used as the negative electrode conductive material is a material having a planar or plate-like shape, and may be expressed as plate-type graphite. For example, the flake-type conductive material refers to a material included to maintain a conductive path within the negative electrode active material layer, and refers to a material that secures a planar conductive path within the negative electrode active material layer rather than a material that plays a role in storing and releasing lithium.

In the present disclosure, the use of plate-type graphite as a conductive material means that it is processed into a planar or plate-shaped form and used as a material that secures a conductive path rather than a role of storing or releasing lithium. In this case, the negative electrode active material included together has high capacity characteristics for lithium storage and release, and plays a role of storing and releasing all lithium ions transferred from the positive electrode.

In the present disclosure, the use of a carbon-based active material as an active material means that it is processed into a particulate or spherical shape, and used as a material that stores or releases lithium.

In an embodiment of the present disclosure, the carbon-based active material, which is artificial graphite or natural graphite, may have a particulate shape and a BET surface area satisfying a range of about 0.1 m²/g or more and 4.5 m²/g or less. In addition, the plate-like graphite, which is a flake-type conductive material, may have a BET surface area of about 5 m²/g or more in a flake shape.

In an embodiment of the present disclosure, the negative electrode binder may include at least one selected from polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid, and materials in which hydrogens thereof are substituted with Li, Na or Ca, and may also include various copolymers thereof.

The negative electrode binder according to an embodiment of the present disclosure serves to hold the active material and the conductive material in order to suppress distortion and structural deformation of the negative electrode structure in volume expansion and relaxation of the silicon-based active material, and any general binder may be applied when the above role is satisfied. For example, a water-based binder may be used or a PAM-based binder may be used.

In an embodiment of the present disclosure, the negative electrode binder may be about 30 parts by weight or less, for example, about 25 parts by weight or less, or about 20 parts by weight or less, based on 100 parts by weight of the negative electrode composition, and according to an embodiment, may be about 1 parts by weight or more, or about 2 parts by weight or more.

An embodiment of the present disclosure provides a method for manufacturing a negative electrode active material, the method including: preparing a porous carbon; and depositing silicon onto the porous carbon to form a silicon-carbon composite, in which, when the silicon-carbon composite is pressed under a pressure of about 3 tons to about 9 tons, the Dmin value is about 0.9 µm or greater.

In the present disclosure, the porous carbon has a ratio of micropore volume with a diameter of less than about 2 nm, as measured by a nitrogen adsorption method, for example, a first pore ratio of about 85% or more. The porous carbon may also have a ratio of a second pore with a diameter of about 2 nm or more to about 50 nm or less of about 10% or less, as measured by a nitrogen adsorption method.

The present disclosure provides the above-described physical properties under pressing when the conditions of the porous carbon are changed. In the manufacture of the silicon-carbon composite, when the micropore volume ratio of the porous carbon, for example, the first pore ratio, is 85% or more and porous carbon made of resin rather than biomass is used, the rigidity of the resulting silicon-carbon composite is enhanced. Accordingly, the physical properties under the above pressing conditions are satisfied, thereby providing characteristics that enhance the lifespan characteristics of the secondary battery.

In an embodiment of the present disclosure, the porous carbon has a first pore ratio of about 85% or more, for example, about 87% or more or about 90% or more, and about 98% or less, for example, about 95% or less, as measured by a nitrogen adsorption method, wherein the first pore has a diameter of less than about 2 nm.

In an embodiment of the present disclosure, the porous carbon has a second pore ratio of about 10% or less, for example, about 8% or less, and about 3% or more or about 5% or more, as measured by a nitrogen adsorption method, wherein the second pore has a diameter of about 2 nm or more to about 50 nm or less.

In addition, the porous carbon provides a method of manufacturing a negative electrode active material, in which the circularity is about 0.7 to 1.0 as defined by Formula 1: [Formula 1] $4 π {A / P}^{2}$

In Formula 1, "A" is an area, and "P" is a perimeter.

When the physical properties of the porous carbon are controlled as described above, the mechanical rigidity is enhanced, and by using porous carbon satisfying the physical properties, the density and deposition uniformity of silicon may be improved during deposition.

According to an embodiment, the present disclosure provides a negative electrode for a lithium secondary battery, including: a negative electrode current collector layer, and a negative electrode active material layer provided on one or both sides of the negative electrode current collector layer, in which the negative electrode active material layer includes the negative electrode composition according to the present disclosure or a cured product thereof.

FIG. 2 is a diagram illustrating a stacked structure of a negative electrode for a lithium secondary battery according to an embodiment of the present disclosure. For example, a negative electrode 100 for a lithium secondary battery including a negative electrode active material layer 20 on one surface of a negative electrode current collector layer 10 may be identified. Although FIG. 1 illustrates the negative electrode active material layer formed on one surface, the disclosure is not limited thereto, and, for example, the negative electrode active material layer 20 may be included on both surfaces of the negative electrode current collector layer 10.

In an embodiment of the present disclosure, the negative electrode 100 for a lithium secondary battery may be formed by coating and drying a negative electrode slurry including the negative electrode composition on one or both surfaces of the negative electrode current collector layer 10, thereby forming the negative electrode active material layer 20.

At this time, the negative electrode slurry may include the negative electrode composition and a slurry solvent.

In an embodiment of the present disclosure, the solid content of the negative electrode slurry may satisfy a range of about 5% to 40%.

In another embodiment, the solid content of the negative electrode slurry may satisfy a range of about 5% to 40%, for example, about 7% to 35%, or about 10% to 30%.

The solid content of the negative electrode slurry may refer to the content of the negative electrode composition included in the negative electrode slurry, and may be expressed as the content of the negative electrode composition based on 100 parts by weight of the negative electrode slurry.

When the solid content of the negative electrode slurry is within the above range, the viscosity during formation of the negative electrode active material layer 20 is appropriate, minimizing particle agglomeration of the negative electrode composition and allowing the negative electrode active material layer 20 to be efficiently formed.

In an embodiment of the present disclosure, the slurry solvent may be used without limitation as long as it is capable of dissolving the negative electrode composition, and examples thereof may include water or NMP (N-methyl-2-pyrrolidone).

In an embodiment of the present disclosure, the negative electrode current collector layer 10 generally has a thickness of about 1 µm to 100 µm. The negative electrode current collector layer 10 is not particularly limited as long as it has high conductivity without causing chemical changes in the battery, and examples thereof include copper, stainless steel, aluminum, nickel, titanium, calcined carbon, copper or stainless steel surface-treated with carbon, nickel, titanium, or silver, and aluminum-cadmium alloy. In addition, the negative electrode collector layer may have fine unevenness formed on the surface to strengthen the bonding strength of the negative electrode active material, and may be used in various forms such as a film, sheet, foil, net, porous body, foam, and non-woven fabric.

In an embodiment of the present disclosure, a negative electrode 100 for a lithium secondary battery is provided, in which the negative electrode current collector layer 10 has a thickness of about 1 µm or more to about 100 µm or less, and the negative electrode active material layer 20 has a thickness of about 5 µm or more to about 500 µm or less.

However, the thickness may be variously modified depending on the type and purpose of the negative electrode 10 used and is not limited thereto.

In an embodiment of the present disclosure, the porosity of the negative electrode active material layer 20 may be about 10% or more and 60% or less.

In another embodiment, the porosity of the negative electrode active material layer 20 may be about 10% or more and 60% or less, for example, about 20% or more and 50% or less, or about 30% or more and 45% or less.

The porosity varies depending on the composition and content of the silicon-based active material, the conductive material, and the binder included in the negative electrode active material layer 20. By including the silicon-based active material and the conductive material according to the present disclosure in a specific composition and contents thereof, the above range is satisfied, and accordingly, the electric conductivity and resistance of the electrode have an appropriate range.

In an embodiment of the present disclosure, a lithium secondary battery is provided, which includes a positive electrode, the negative electrode for a lithium secondary battery according to the present disclosure, a separator interposed between the positive electrode and the negative electrode, and an electrolyte.

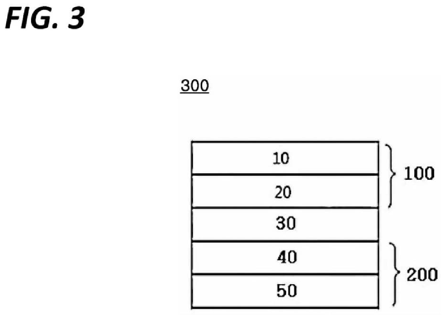

FIG. 3 illustrates a stacked structure of a secondary battery 300 according to an embodiment of the present disclosure. For example, the negative electrode 100 for a lithium secondary battery includes the negative active material layer 20 on one side of a negative current collector layer 10, and a positive electrode 200 for a lithium secondary battery includes a positive active material layer 40 on one side of a positive current collector layer 50. In addition, the lithium secondary battery negative electrode 100 and the lithium secondary battery positive electrode 200 are formed in a stacked structure with a separator 30 interposed therebetween.

The lithium secondary battery 300 according to an embodiment of the present disclosure may include the negative electrode 100 for a lithium secondary battery as described above. The lithium secondary battery 300 may include the negative electrode 100, a positive electrode 200, a separator 30 interposed between the positive electrode 200 and the negative electrode 100, and an electrolyte (not illustrated). The negative electrode 100 is the same as the above-described negative electrode 100. The negative electrode 100 has already been described, and thus, further description is omitted.

The positive electrode 200 may include a positive electrode current collector 50 and a positive electrode active material layer 40 formed on the positive electrode current collector 50 and including a positive electrode active material.

In the positive electrode 200, the positive electrode current collector 50 is not particularly limited as long as it has conductivity without causing chemical changes in the battery, and examples thereof include stainless steel, aluminum, nickel, titanium, calcined carbon, and aluminum or stainless steel surface-treated with carbon, nickel, titanium, or silver. The positive electrode current collector 50 may typically have a thickness of about 3 µm to 500 µm, and fine unevenness may be formed on the surface of the positive electrode current collector 50 to strengthen the bonding strength of the positive electrode active material. For example, the positive electrode collector may be used in various forms, such as a film, a sheet, a foil, a net, a porous body, a foam, a non-woven body, and the like.

The positive electrode active material may be a commonly used positive electrode active material. For examle, the positive electrode active material may be a layered compound such as lithium cobalt oxide (LiCoO₂), lithium nickel oxide (LiNiO₂), or a compound substituted with one or more transition metals; lithium iron oxide such as LiFe₃O₄; lithium manganese oxide such as Li_{1+c}1Mn_{2-c1}O₄ (0≤c1≤0.33), LiMnO₃, LiMn₂O₃, and LiMnO₂; lithium copper oxide (Li₂CuO₂); vanadium oxide such as LiV₃O₈, V₂O₅, and Cu₂V₂O₇; Ni-site type lithium nickel oxide expressed by the chemical formula LiNi_{1-c2}M_{c2}O₂ (wherein, M is at least one selected from Co, Mn, Al, Cu, Fe, Mg, B, and Ga, and satisfies 0.01≤c2≤0.3); a lithium manganese composite oxide represented by the chemical formula LiMn_{2-c3}M_{c3}O₂ (wherein, M is at least one selected from Co, Ni, Fe, Cr, Zn, and Ta, and satisfies 0.01≤c3≤0.1) or Li₂Mn₃MO₈ (wherein, M is at least one selected from Fe, Co, Ni, Cu, and Zn); LiMn₂O₄, in which a part of Li in the chemical formula is replaced with an alkaline earth metal ion; but the present disclosure is not limited thereto. The positive electrode may be Li-metal.

The positive electrode active material layer 40 may include a positive electrode conductive material and a positive electrode binder together with the positive electrode active material described above.

The positive electrode conductive material used to impart conductivity to the electrode may be any material that is electrically conductive without causing chemical changes in the battery to be constructed, without any particular limitation. Examples thereof include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used alone or in mixture of two or more thereof.

The positive electrode binder serves to improve the adhesion between positive electrode active material particles and the adhesive strength between the positive electrode active material and the positive electrode current collector. Examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, which may be used alone or in mixture of two or more thereof.

The separator 30 separates the negative electrode 100 and the positive electrode 200 and provides a migration passage for lithium ions. Any separator that is usually used as a separator in secondary batteries may be used without special restrictions, and any material having low resistance to ion migration in the electrolyte and excellent electrolyte moisture retention capacity may be selected. For example, the separator 30 to be used may be a porous polymer film, for example, a porous polymer film made of a polyolefin polymer such as ethylene homopolymer, propylene homopolymer, ethylene/butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, polyethylene terephthalate fiber, and the like, may be used as the separator 30. In addition, a coated separator containing a ceramic component or a polymer material may be used to secure heat resistance or mechanical strength, and may be selectively used in a single-layer or multi-layer structure.

The electrolyte used in the present disclosure may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like, that may be used in the manufacture of a lithium secondary battery 300.

The electrolyte may include a non-aqueous organic solvent and a metal salt.

Examples of the non-aqueous organic solvent include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolan, formamide, dimethylformamide, dioxolan, acetonitrile, nitromethane, methyl formate, methyl acetate, triester phosphoric acid, trimethoxy methane, dioxolan derivatives, sulfolane, methyl sulfolane, 1,3-dimethyl-2-imidazolidinone, propylene carbonate derivatives, tetrahydrofuran derivatives, ethers, methyl pyrropionate, and ethyl propionate.

Among the carbonate-based organic solvents, ethylene carbonate and propylene carbonate, which are cyclic carbonates, are high-viscosity organic solvents having high dielectric constants and exhibit effective dissociation capacity for lithium salts. When such cyclic carbonates are mixed in an appropriate ratio with low-viscosity, low-dielectric constant linear carbonates such as dimethyl carbonate and diethyl carbonate, an electrolyte having high electrical conductivity may be obtained.

The metal salt may be a lithium salt, and the lithium salt is a substance that is easily dissolved in the non-aqueous electrolyte. For example, an anion of the lithium salt may be at least one selected from F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In addition to the electrolyte components, the electrolyte may further contain one or more additives, such as, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery.

An embodiment of the present disclosure provides a battery module including the secondary battery 300 as a unit cell and a battery pack including the same. Since the battery module and the battery pack include the secondary battery 300 having high capacity, high rate characteristics, and cycle characteristics, they may be used as a power source for medium- and large-sized devices selected from electric vehicles, hybrid electric vehicles, plug-in hybrid electric vehicles, and power storage systems.

Hereinafter, examples are presented to assist in the understanding of the present disclosure, but the examples are merely illustrative of the disclosure, and it will be apparent to those skilled in the art that various modifications and alterations may be made within the spirit and scope of the present disclosure. It is, of course, understood that such modifications and alterations fall within the scope of the appended claims.

### <Preparation Example>

### <Example 1>

### Preparation of Silicon-Carbon Composite

After carbonizing a resin porous carbon raw material at 500 °C to 1,000 °C under an inert gas atmosphere, the carbonized porous carbon was pulverized and classified. Physical activation was then performed by oxidizing the porous carbon using an oxidizing gas (such as steam, CO₂, or O₂) to form pores. The resulting porous carbon had a first pore ratio of 90.3% with a diameter of less than 2 nm as measured by a nitrogen adsorption method, and corresponded to highly porous carbon having a circularity of 0.9 to 1.0.

At this time, the circularity was adjusted through a circularization process of the porous carbon itself. A ball-milling method was used for circularization of the porous carbon, and the ball-milling process was carried out for about 6 hours. Through such a circularization process, the above-described circularity of 0.9 to 1.0 was satisfied.

Subsequently, after subjecting the porous carbon to washing and drying, silicon was deposited on the porous carbon by controlling the flow rate of SiH₄, thereby forming a silicon-carbon composite.

### <Comparative Example 1>

### Preparation of Silicon-Carbon Composite

After carbonizing a resin porous carbon raw material at 500 °C to 1,000 °C under an inert gas atmosphere, the carbonized porous carbon was pulverized and classified. Physical activation was then performed by oxidizing the porous carbon using an oxidizing gas (such as steam, CO₂, or O₂) to form pores. The resulting porous carbon had a first pore ratio of 87% with a diameter of less than 2 nm as measured by a nitrogen adsorption method, and corresponded to porous carbon having a circularity of 0.4 to 0.7.

At this time, the circularity was adjusted through a circularization process of the porous carbon itself. For circularization of the porous carbon, a ball-milling method was used, and by shortening the ball-milling time compared with Example 1, the circularity of about 0.4 to about 0.7 was satisfied.

Subsequently, after subjecting the porous carbon to washing and drying, silicon was deposited on the porous carbon by controlling the flow rate of SiH₄, thereby forming a silicon-carbon composite.

### <Comparative Example 2>

### Preparation of Silicon-Carbon Composite

After carbonizing a resin porous carbon raw material at 500 °C to 1,000 °C under an inert gas atmosphere, the carbonized porous carbon was pulverized and classified. Physical activation was then performed by oxidizing the porous carbon using an oxidizing gas (such as steam, CO₂, or O₂) to form pores. The resulting porous carbon had a first pore ratio of 83% with a diameter of less than 2 nm as measured by a nitrogen adsorption method, and corresponded to porous carbon having a circularity of 0.3 to 0.6.

At this time, the circularity was adjusted through a circularization process of the porous carbon itself. For circularization of the porous carbon, a ball-milling method was used, and by shortening the ball-milling time compared with Example 1, the circularity of about 0.3 to about 0.6 was satisfied.

Subsequently, after subjecting the porous carbon to washing and drying, silicon was deposited on the porous carbon by controlling the flow rate of SiH4, thereby forming a silicon-carbon composite.

The silicon-carbon composites prepared in Examples and Comparative Examples were pressed starting from about 3 tons up to about 9 tons, and the results after pressing to about 9 tons are shown in Table 1 below.

**[Table 1]**

| | Dmin of silicon-carbon composite | Dmax of silicon-carbon composite | D50 of silicon-carbon composite | Fine powder ratio below 2 µm | Moisture content |
|---|---|---|---|---|---|
| Ex. 1 | 2.75um | 14.5um | 7.57um | 0% | 18.1ppm |
| Comp. Ex 1 | 0.594um | 18.7um | 8.96um | 2.24% or more (fine powder occurred starting from pressing at 3 tons; fine powder ratio below 2 µm was 1.2% when pressed at 3 tons) | 128.6ppm |
| Comp. Ex. 2 | 0.314um | 12.7 | 5.67 | 8.29% (fine powder was present even before pressing and further increased when pressed at 1 ton) | 168.8ppm |

In Table 1, the pressing method according to an embodiment of the present disclosure was as follows. One gram of a sample was placed into a pellet density measuring device, pressed to a target pressure, and maintained for 30 seconds. The pressed sample was then collected, placed into a mortar, and loosened, after which the physical properties of each sample were measured.

The pellet density measuring device corresponds to equipment capable of recovering a powder in a pellet form by inserting the powder into a mold of a predetermined standard, mounting the mold on the device, and pressing the powder to a target pressure using an electric hydraulic press system.

At this time, for particle size distribution measurement, 0.06 g of the pressed sample was mixed with 100 ml of a 0.1% Triton-X (dispersant) dispersion solution, followed by the addition of 10 g of water to disperse the sample. To loosen agglomerated particles formed during pressing, the dispersion was sonicated at 20 kHz for 10 minutes. Thereafter, 5 g of the dispersion was introduced into a particle size distribution analyzer, and the measurement was repeated three times while stirring at 2,500 rpm. The results were recorded in Table 1.

Based on the particle size distribution results (a normal distribution graph with particle size on the x-axis and volume fraction on the y-axis), Dmin, D50, and Dmax were measured according to the following criteria:
Dmin: the particle size value at which the volume fraction starts to appear on the graph.
D50: the particle size value at which the cumulative volume fraction reaches 50%.
Dmax: the particle size value at which the graph terminates.

In addition, the fine powder ratio was determined by calculating the cumulative volume fraction at a particle size of 2 µm based on the particle size distribution results (a normal distribution graph with particle size on the x-axis and volume fraction on the y-axis).

Finally, for moisture content measurement, 2 g of the pressed sample was placed in a container dedicated to a moisture analyzer, heated to 250 °C, and the measured moisture content was recorded in Table 1.

### <Manufacture of Negative Electrode>

A negative electrode active material including the silicon-based active material shown in Table 1 (graphite: SiC = 90:10), a negative electrode conductive material composed of carbon black and SWCNT, and a binder made up of SBR and CMC were added to distilled water as a solvent for forming a negative electrode slurry at a weight ratio of 95:2:3 to prepare a negative electrode slurry (a solid content concentration of about 25 wt%).

As a mixing method, the negative electrode conductive material, binder, and water were dispersed using a homogeneous mixer at 2,500 rpm for 30 minutes, and then the silicon-based active material was added and dispersed at 2,500 rpm for 30 minutes to prepare a negative electrode slurry.

As a negative electrode current collector layer, the negative electrode slurry was coated on both sides of a copper current collector (thickness: 15 µm) with a loading amount of 85 mg/25 cm², rolled, and dried in a vacuum oven at 130 °C for 10 hours to form a negative electrode active material layer (thickness: 45 µm), which was used as a negative electrode (thickness of negative electrode: 60 µm, porosity of negative electrode: 40.0%).

### < Manufacturing of Secondary Battery>

LiNi_{0.6}Co_{0.2}Mn_{0.2}O₂ (average particle size (D50): 15 µm) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of 97:1.5:1.5 to prepare a positive electrode slurry (solid content concentration: 78 wt%).

The positive electrode slurry was coated on both sides of an aluminum current collector (thickness: 12 µm) as a positive electrode collector at a loading amount of 537 mg/25 cm², rolled (roll pressed), and dried in a vacuum oven at 130 °C for 10 hours to form a positive electrode active material layer (thickness: 65 µm), thereby manufacturing a positive electrode (positive electrode thickness: 77 µm, porosity 26%).

A lithium secondary battery was manufactured by interposing a polyethylene separator between the positive electrode and each of the negative electrodes of Examples and Comparative Examples and injecting an electrolyte.

The electrolyte was an organic solvent prepared by mixing fluoroethylene carbonate (FEC) and diethyl carbonate (DMC) in a volume ratio of 10:90, adding vinylene carbonate thereto at 3 wt% based on the total weight of the electrolyte, and adding LiPF₆ as a lithium salt at a concentration of 1 M.

### <Experimental Example>

### Experimental Example 1: Monocell Lifespan Performance Results

The secondary batteries including the negative electrodes manufactured in Examples and Comparative Examples were subjected to a life evaluation using an electrochemical charge/discharge test, and the capacity retention rate was evaluated. The secondary batteries underwent an in-situ cycle test under the conditions of 4.2 V to 2.5 V and 1C/1C. 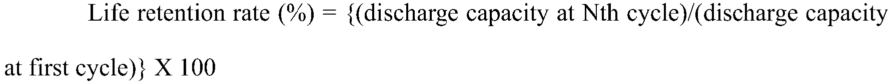 Life retention rate (%) = {(discharge capacity at Nth cycle)/(discharge capacity at first cycle)} X 100

### Experimental Example 2: Monocell Rapid-Charging Lifespan Performance Evaluation Results

The secondary batteries including the negative electrodes manufactured in Examples and Comparative Examples were subjected to a life evaluation using an electrochemical charge/discharge test, and the capacity retention rate was evaluated. The secondary batteries underwent an in-situ cycle test within a voltage window of 4.2 V to 2.5 V, in which charging was performed at 2C in the SOC range of 0 to 50%, at 1.5C in the SOC range of 50 to 80%, and at 1C in the SOC range of 80 to 100%, followed by discharging at 1C. 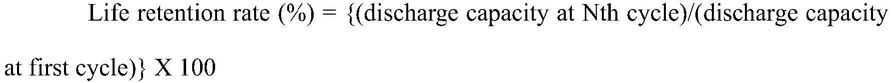 Life retention rate (%) = {(discharge capacity at Nth cycle)/(discharge capacity at first cycle)} X 100

**[Table 2]**

| | Monocell lifespan performance (%, capacity retention @400 cycles) | Monocell rapid-charging lifespan performance (%, capacity retention @400 cycles) |
|---|---|---|
| Ex. 1 | 96 | 94 |
| Comp. Ex. 1 | 95 | 91 |
| Comp. Ex. 2 | 94 | 87 |

As shown in Table 1, It was confirmed that, in the case of the silicon-carbon composite according to the present disclosure, when the particle size distribution and the fine powder ratio below 2 µm were controlled during the manufacture of the silicon-carbon composite by adjusting the physical properties of the porous carbon precursor, the deposition of silicon became more uniform and dense, and the silicon-carbon composite manufactured under these conditions exhibited improved powder fracture resistance, satisfying a Dmin value of about 0.9 µm or more when pressed under a pressure of about 3 tons or more to about 9 tons or less, and thus, the moisture content was effectively controlled.

For reference, when fine powder of less than 2 µm is included after pressing due to a non-uniform and non-dense depositoin, deterioration in water-based processability and degradation in lifespan may occur.

Due to these characteristics, the negative electrode including the silicon-carbon composite according to the present disclosure, as shown in Table 2, not only secures excellent capacity characteristics but also exhibits reduced side reactions on the surface of the active material, leading to improved resistance and enhanced lifespan performance against volume expansion.

For example, as shown in the monocell lifespan performance evaluation results in Table 2, when the silicon-carbon composite of the embodiment of the present disclosure having excellent particle rigidity was used, the capacity retention after 400 cycles was at the level of about 96%, which was superior to that of the comparative example.

In addition, according to the monocell rapid-charging lifespan performance evaluation results, when the silicon-carbon composite of the embodiment of the present disclosure having excellent particle rigidity was used, the capacity retention after 400 cycles remained at the level of about 94%, even under rapid charging at a C-rate of 2C in the Si charging region (SOC 0 to 50%), demonstrating superior capacity retention compared with the comparative example.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

## Claims

1. A negative electrode active material for a lithium secondary battery, comprising a silicon-carbon (Si/C) composite,
wherein, when the silicon-carbon composite is pressed under a pressure of about 3 tons or more and 9 tons or less, a minimum particle diameter (Dmin) value is about 0.9 µm or more.

2. The negative electrode active material for a lithium secondary battery according to claim 1, wherein, when the silicon-carbon composite is pressed under a pressure of about 3 tons or more and 9 tons or less, a moisture content is about 200 ppm or less.

3. The negative electrode active material for a lithium secondary battery according to claim 1, wherein, when the silicon-carbon composite is pressed under a pressure of about 3 tons or more and 9 tons or less, the Dmin value is about 0.9 µm or more, a maximum particle diameter (Dmax) value is about 20 µm or less, and an average particle diameter (D50) is about 3 µm or more and 9 µm or less.

4. The negative electrode active material for a lithium secondary battery according to claim 1, wherein, when the silicon-carbon composite is pressed under a pressure of about 3 tons or more and 9 tons or less, a particle volume fraction of less than about 2 µm based on the silicon-carbon composite is about 2% or less.

5. The negative electrode active material for a lithium secondary battery according to claim 1, further comprising a carbon-based active material.

6. The negative electrode active material for a lithium secondary battery according to claim 1, wherein the silicon-carbon composite is included in an amount of about 60 parts by weight or less based on 100 parts by weight of the negative electrode active material.

7. A method for manufacturing a negative electrode active material for a lithium secondary battery, the method comprising:
preparing porous carbon; and
depositing silicon on the porous carbon to form a silicon-carbon composite,
wherein, when the silicon-carbon composite is pressed under a pressure of about 3 tons or more and 9 tons or less, a minimum particle diameter (Dmin) value is about 0.9 µm or more.

8. The method according to claim 7, wherein the porous carbon is prepared from a resin porous carbon raw material.

9. The method according to claim 7, wherein the porous carbon has a ratio of first pores having a diameter of less than 2 nm of about 85% or more as measured by nitrogen adsorption, and a ratio of second pores having a diameter of 2 nm or more and 50 nm or less of about 10% or less as measured by a nitrogen adsorption method.

10. The method according to claim 7, wherein the porous carbon has a circularity of about 0.7 to 1.0 as defined by Formula 1: [Formula 1] $4 π {A / P}^{2}$ where "A" is an area and "P" is a perimeter.

11. A negative electrode composition for a lithium secondary battery, comprising:
the negative electrode active material according to anyone of claims 1 to 6;
a negative electrode conductive agent; and
a negative electrode binder.

12. The negative electrode composition for a lithium secondary battery according to claim 11, wherein the negative electrode active material is included in an amount of about 40 parts by weight or more based on 100 parts by weight of the negative electrode composition.

13. A negative electrode for a lithium secondary battery, comprising:
a negative electrode current collector layer; and
a negative electrode active material layer provided on one or both surfaces of the negative electrode current collector layer,
wherein the negative electrode active material layer includes the negative electrode composition according to claim 11 or a cured product thereof.

14. The negative electrode for a lithium secondary battery according to claim 13, wherein the negative electrode current collector layer has a thickness of about 1 µm or more and 100 µm or less, and
the negative electrode active material layer has a thickness of about 5 µm or more and 500 µm or less.

15. A lithium secondary battery, comprising:
a positive electrode;
the negative electrode for a lithium secondary battery according to claim 13;
a separator interposed between the positive electrode and the negative electrode; and
an electrolyte.
